# EUROPEAN PATENT APPLICATION

(11) **EP 3 059 839 A1**
(43) Date of publication of application: **24.08.2016**
(21) Application number: 16155973.7
(22) Date of filing: 16.02.2016
(51) Int. Cl.: H02M 1/32, H02M 3/06, H02M 7/10

(54) **A SUPPLY APPARATUS OF AN ELECTRICAL LOAD**

(30) Priority: 17.02.2015 IT BO20150078
(71) Applicant: Energy Technology S.r.l., 40056 Valsamoggia (IT)
(72) Inventor: FARIOLI, Marco, 44042 CENTO (FERRARA) (IT); TADDIA, Giuseppe, 40066 PIEVE DI CENTO (BOLOGNA) (IT)
(74) Representative: Milli, Simone

(57) **Abstract**

Described is a supply apparatus of an electrical load (R), comprising a voltage multiplier circuit (2), connected in use to a supply source (10) so as to be supplied by a supply voltage made available by the same supply source (10) and provided with at least one voltage multiplication stage (3A, 3B), the voltage multiplication stage (3A, 3B) having a first diode (4) and a second diode (5), each provided with an anode (AN) and a cathode (K), and further having at least one electrical capacitance (6A, 6B) electrically connected to the anode (AN) of the first diode (4) and to the cathode (K) of the second diode (5), the apparatus comprising at least one switching device (11A, 11A', 11B, 11B'), associated with the multiplication stage (3A, 3B) and electrically connected at least to one head of the electrical capacitance (6A, 6B), configured for being switchable between a configuration for electrical disconnection of the electrical load (R) with respect to the source (10) and to the multiplier circuit (2) and a operating supply configuration of the electrical load (R) or between a by-pass configuration of the electrical load (R) with respect to a voltage delivered from the source (10).

## Description

This invention relates to an apparatus for supplying an electrical load, comprising in particular a voltage multiplier device, more specifically a multiplier device of the so-called "Villard" type.

Apparatuses for supplying electrical loads are known in the prior art in the sector of apparatuses for supplying high voltage electrical loads.

These power supply apparatuses, as a result of faults of the internal components or upstream electrical components (for example, the components present in the supply line), can determine particularly high voltages and currents on the electrical loads, which may in certain cases even cause permanent damage to the electric load.

There is therefore a strongly felt need to protect an electrical load from any operating overvoltage which can derive from faults or malfunctioning of the supply apparatus or the upstream electrical lines / electrical components.

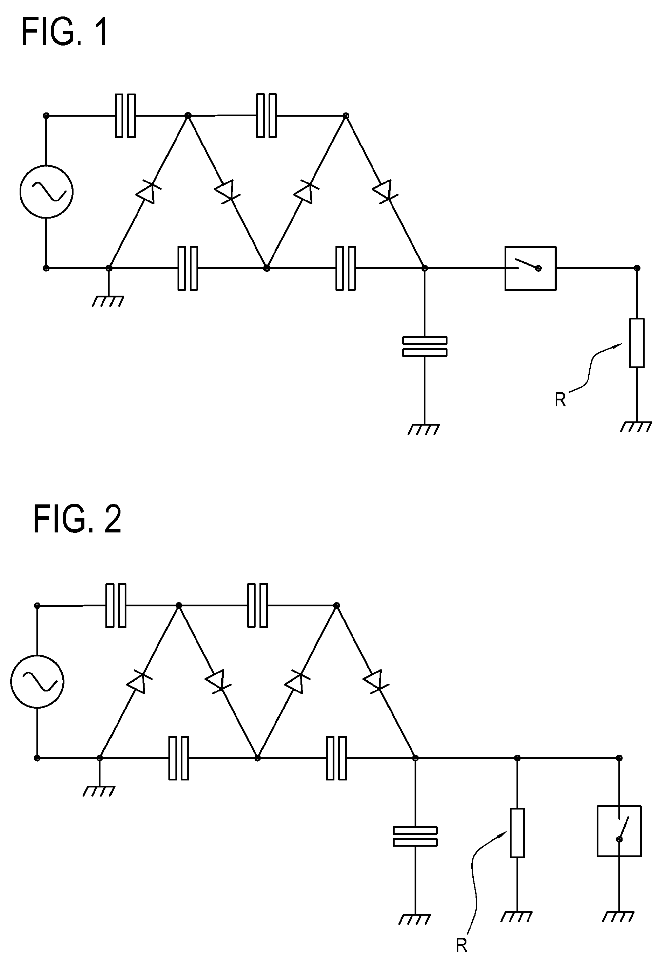

Figures 1 and 2 show two prior art solutions for the protection of electrical loads.

According to the solution of Figure 1, the supply apparatus comprises an ON/OFF device, connected (interposed) between the load and the power supply output, switchable between a closed configuration (that is, for supplying the electrical load) and an open configuration (that is, for protecting or disconnecting the electrical load).

According to the solution of Figure 2, the supply apparatus comprises an ON/OFF device, connected in parallel to the load at the power supply output, switchable between an open configuration (that is, for supplying the electrical load) and a closed configuration (that is, for protecting or bypassing the electrical load). This ON/OFF device is also known as a "crowbar".

The aim of this invention is therefore to provide a power supply apparatus which constitutes an alternative to existing types of apparatuses and which allows, in a particularly reliable and inexpensive manner, the protection of the electrical load supplied.

The technical characteristics of the invention, with reference to the above aims, are clearly described in the claims below and its advantages are apparent from the detailed description which follows, with reference to the accompanying drawings which illustrate a preferred embodiment of the invention provided merely by way of example without restricting the scope of the inventive concept, and in which:
- Figure 1 is a schematic view of a first embodiment of an apparatus for supplying an electrical load of known type;
- Figure 2 is a schematic view of a second embodiment of an apparatus for supplying an electrical load of known type;
- Figure 3 is a schematic view of a first embodiment of an apparatus for supplying an electrical load according to this invention;
- Figure 4 is a schematic view of a second embodiment of an apparatus for supplying an electrical load according to this invention;
- Figure 5 is a schematic view of a third embodiment of an apparatus for supplying an electrical load according to this invention;
- Figure 6 is a schematic view of a fourth embodiment of an apparatus for supplying an electrical load according to this invention.

With reference to the accompanying drawings, the numeral 1 denotes a power supply apparatus according to this invention.

This invention also defines a supply apparatus of an electrical load R, comprising a voltage multiplier circuit 2 (preferably positive), connected in use to a supply source 10 so as to be supplied by a supply voltage made available by the same supply source 10.

Preferably, the multiplier circuit 2 is a Villard multiplier circuit.

The multiplier circuit 2 is equipped with at least one voltage multiplication stage 3A, 3B.

Each voltage multiplication stage 3A, 3B preferably comprises one or more diodes and one or more capacitors, as described in more detail below. The voltage multiplication stage 3A, 3B has a first diode 4 and a second diode 5, each provided with an anode AN and a cathode K, and further having at least one electrical capacitance 6A, 6B electrically connected to the anode AN of the first diode 4 and to the cathode K of the second diode 5.

The electrical capacitance 6A, 6B is formed by at least one capacitor. According to an aspect, the supply apparatus 1 comprises at least one switching device 11A, 11A', 11B, 11B', associated to the multiplication stage 3A, 3B and electrically connected at least to a head of the electrical capacitance 6A, 6B, configured so as to be switchable between an electrical disconnection configuration of the electrical load R with respect to a voltage delivered from the source 10 and an operating supply configuration of the electrical load R or, alternatively, configured for being switchable between a by-pass configuration of the load with respect to the source 10 and to the multiplier circuit 2 and an operating supply configuration of the electrical load R.

It should be noted, therefore, that in the electrical disconnection configuration or in the by-pass configuration, the electrical load R is not subject to the voltage delivered by the source 10, which is amplified through the voltage multiplier circuit 2.

It should be noted that the switching device 11A, 11A', 11 B, 11B' is associated with (integrated in) the multiplication stage 3A, 3B since it is electrically connected to one or more components of the multiplication stage 3A, 3B.

Preferably, the at least one switching device 11A, 11A', 11B, 11B' comprises at least an electrical component having at least two inputs, electrically pilotable for interrupting or connecting the at least two inputs. According to another aspect, the apparatus 1 comprises a bench capacitor (not illustrated), connected in parallel to the electrical load R at an output of the Villard voltage multiplier circuit 2.

According to another aspect, the apparatus 1 comprises a device for measuring an electrical parameter of the apparatus and a control unit 13, connected to the at least one switching device 11A, 11A', 11 B, 11 B' and to the measuring device, for regulating the configuration of the switching device 11A, 11A', 11B, 11B' on the basis of the measured electrical parameter.

In other words, the control unit 13 adjusts the configuration of the switching device 11A, 11A', 11B, 11B' (between the operating configuration and the electrical disconnection or by-pass configuration) on the basis of the electrical parameter measured.

According to one aspect, the electrical parameter is a voltage (or current). According to this aspect, if the measured value of the voltage is greater than a predetermined value, the control unit 13 commands the switching device 11A, 11A', 11 B, 11 B' to adjust the switching device 11A, 11A', 11 B, 11 B' to the electrical disconnection or by-pass configuration.

In this way, the load R is automatically disconnected electrically relative to the voltage delivered by the multiplier circuit 2 and is therefore not subject to any overvoltage.

For this reason, the electrical load R is preserved with respect to any overvoltages (or overcurrents), thereby preventing any relative damage. According to one aspect, the electrical parameter is the supply voltage made available by the supply source 10.

According to this aspect, the control unit 13 adjusts the configuration of the switching device 11A, 11A', 11 B, 11 B' on the basis of the measured value of the supply voltage made available by the power supply source 10 (that is, of the input voltage to the multiplier circuit 2).

According to another aspect, the electrical parameter is the voltage measured at a predetermined point of the Villard voltage multiplier circuit 2.

According to another aspect, the electrical parameter is the current measured at a predetermined point of the Villard voltage multiplier circuit 2 or of the load R.

According to this aspect, the electrical parameter may be the voltage measured at the output of the Villard voltage multiplier circuit 2.

Further, according to this aspect, the electrical parameter may be the voltage measured at a head of the capacitor of a stage of the voltage multiplier circuit 2.

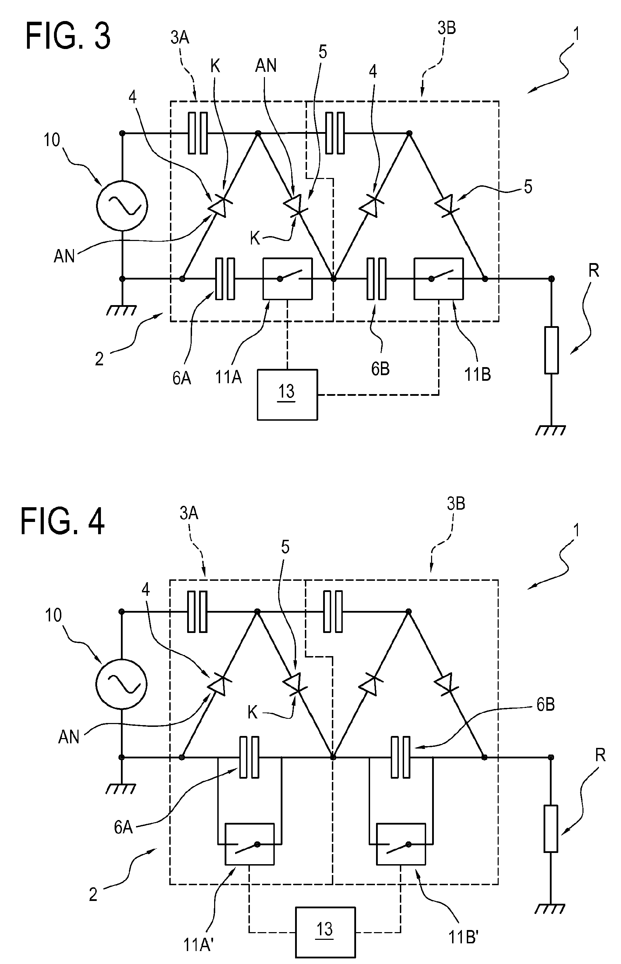

The preferred embodiment illustrated in Figure 3 is described below. According to this embodiment, the switching device 11A, 11 B is configured to electrically connect at least one of the heads of the electrical capacitance 6A, 6B and the cathode K of the second diode 5 in the operating supply configuration of the electrical load R and electrically disconnect the at least one of the heads of the electrical capacitance 6A, 6B and the cathode K of the second diode 5 in the electrical disconnection configuration.

The embodiment illustrated in Figure 4 is described below.

According to this embodiment, the switching device 11A',11B' is configured to electrically disconnect at least one of the heads of the electrical capacitance 6A, 6B and the other head of the electrical capacitance 6A, 6B in the operating supply configuration and to electrically connect at least one of the heads of the electrical capacitance 6A, 6B and the other head of the electrical capacitance 6A, 6B in the by-pass configuration of the load R (with respect to the source 10 and the multiplier circuit 2).

Described below is an embodiment not illustrated.

According to this embodiment, the switching device 11A, 11A', 11 B, 11 B' is configured for electrically connecting in the electrical by-pass configuration both the heads of the electrical capacitor 6A, 6B with a zero-potential region (earth).

Moreover, according to this embodiment, the switching device 11A, 11A', 11B, 11B' is configured for electrically disconnecting (interrupting the electrical connection) in the electrical by-pass configuration between both the heads of the electrical capacitor 6A, 6B with the zero-potential region (earth).

It should be noted that, according to another aspect, the Villard voltage multiplier circuit 2 comprises a plurality of voltage multiplication stages 3A, 3B and a plurality of switching devices 11A, 11A', 11B, 11B'. According to this aspect, each switching device 11A, 11A', 11 B, 11 B' is associated with a voltage multiplication stage 3A, 3B.

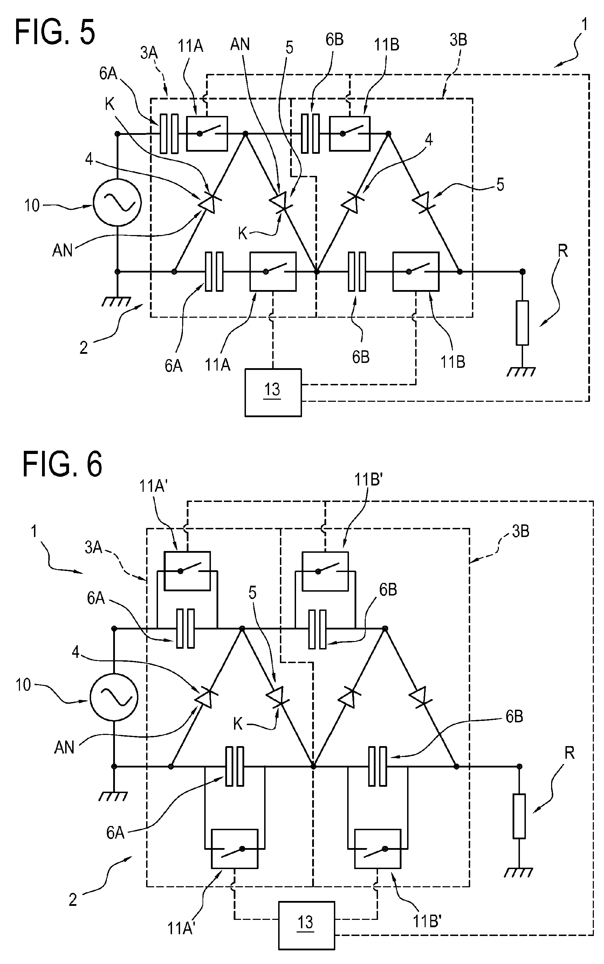

According to the embodiment illustrated in Figures 5 and 6, the switching devices are associated with all the capacitors of the stages defining the multiplication circuit 2 (according to the technical-functional methods described above).

It should be noted that, advantageously, according to this aspect, the apparatus 1 comprises a plurality of switching devices 11A, 11A', 11B, 11 B' designed to operate with voltages which are more limited than those to which the prior art switching devices are subjected, of Figures 1 and 2. In this way, advantageously, the apparatus 1 is particularly simple and inexpensive.

According to yet another aspect, the apparatus 1 comprises a container designed to contain the multiplier circuit 2. It should be noted that, according to this aspect, the apparatus 1 preferably comprises at least one element extractable from the box-shaped container, to which are associated one or more of the switching devices 11A, 11A', 11 B, 11 B' to be extracted from and inserted in the box-shaped container.

It should be noted, therefore, that according to this aspect, the extraction of the extractable element from the container means that the switching device 11A, 11A ', 11B, 11B' is disconnected from the stage of the multiplication circuit 2 to which it is associated.

In this way, advantageously, the switching device 11A, 11A', 11B, 11B' may be quickly replaced.

According to another aspect, the control unit 13 or a further control unit (distributed over several modules or centralised in a single device) is configured to receive a diagnostic signal relating to an electrical parameter of the supply apparatus (more precisely of the multiplier circuit 2). According to this aspect, the apparatus preferably comprises one or more sensors for measuring the electrical parameters (voltages, currents) - which can be used for diagnostic purposes - at one or more points of the voltage multiplier circuit 2.

The sensors transmit the signals measured to the control unit 13 which interprets them to provide information on the operating status of the circuit 2 (normal operation, malfunction).

It should be noted that, in this way, any faults which the electrical circuit 2 is affected by can be easily be identified automatically through the sensors and the control unit.

It should also be noted that the modularity of the supply apparatus means that any faulty components can also be easily replaced.

With reference to the latter aspect, several components of the circuit 2 (preferably but not necessarily the components of each multiplication stage) may be integrated in a module (replaceable in the case of a fault). According to this aspect, at least one diagnostic signal is detected for each module through at least one sensor.

It should be noted, therefore, that in general the apparatus comprises at least one sensor for measuring an electrical parameter of the electric circuit 2 and a control unit, connected to the measuring sensor and configured to provide information regarding the operating status (malfunction, normal operation) of the electric circuit 2 on the basis of the electrical parameter measured.

## Claims

1. A supply apparatus of an electrical load (R), comprising a voltage multiplier circuit (2), connected in use to a supply source (10) so as to be supplied by a supply voltage made available by the same supply source (10) and provided with at least a voltage multiplication stage (3A, 3B), the voltage multiplication stage (3A, 3B) having a first diode (4), and a second diode (5), each provided with an anode (AN) and a cathode (K), and further having at least an electrical capacitance (6A, 6B) electrically connected to the anode (AN) of the first diode (4) and to the cathode (K) of the second diode (5),
the apparatus being **characterised in that** it comprises at least a switching device (11A,11A',11B,11B'), associated to the multiplication stage (3A, 3B) and electrically connected at least to a head of the electrical capacitance (6A, 6B), configured so as to be switchable between an electrical disconnection configuration of said electrical load (R) with respect to the source (10) and from the voltage multiplier circuit (2) and an operating supply configuration of the electrical load (R) or between a by-pass configuration of the electrical load (R) with respect to the source (10) and to the multiplier circuit (2) and an operating supply configuration to the electrical load (R).

2. The supply apparatus according to the preceding claim, comprising a bench capacitance, connected in parallel to the electrical load (R) at an output of the voltage multiplier circuit (2).

3. The supply apparatus of an electrical load (R) according to any one of the preceding claims, comprising a detecting device of an electrical parameter of the apparatus and a control unit (13), connected to the at least a switching device (11A,11A',11B,11B') and to the detecting device, for regulating the configuration of the switching device (11A,11A',11B,11B') on the basis of the detected electrical parameter.

4. The supply apparatus according to the preceding claim, wherein the electrical parameter is the supply voltage made available by the supply source (10).

5. The supply apparatus according to claim 3, wherein the electrical parameter is the voltage measured at a predetermined point of the voltage multiplier circuit (2).

6. The supply apparatus according to any one of the preceding claims, wherein the switching device (11A,11A',11B,11B') electrically connects at least one of the heads of the electrical capacitance (6A, 6B) and the cathode (K) of the second diode (5) in the operating supply configuration of the electrical load (R) and electrically disconnects the at least one of the heads of the electrical capacitance (6A, 6B) and the cathode (K) of the second diode (5) in the electrical disconnection configuration.

7. The supply apparatus according to any one of the preceding claims from 1 to 5, wherein the switching device (11A,11A',11B,11B') electrically connects, in the by-pass configuration, both the heads of the electrical capacitance (6A, 6B) with a zero-potential region.

8. The supply apparatus according to any one of the preceding claims from 1 to 5, wherein the switching device (11A,11A',11B,11B') is configured to electrically disconnect at least one of the heads of the electrical capacitance (6A, 6B) and the other head of the electrical capacitance (6A, 6B) in the operating supply configuration, and is further configured to electrically connect at least one of the heads of the electrical capacitance (6A, 6B) and the other head of the electrical capacitance (6A, 6B) in the by-pass configuration.

9. The supply apparatus according to any one of the preceding claims, wherein the Villard voltage multiplier circuit (2) comprises a plurality of voltage multiplication stages (3A, 3B) of and a plurality of switching devices (11A,11A',11B,11B') with each switching device (11A,11A',11B,11B') associated to a voltage multiplication stage (3A, 3B).

10. The supply apparatus according to any one of the preceding claims, wherein said at least a switching device (11A,11A',11B,11B') comprises at least an electrical component having at least two inputs, electrically pilotable for interrupting or connecting the at least two inputs.

11. The supply apparatus according to any one of the preceding claims, comprising at least one sensor for measuring an electrical parameter of the electric circuit (2) and a control unit, connected to the measuring sensor and configured to provide information regarding the operating status of the electric circuit (2) on the basis of the electrical parameter measured.
